# EUROPEAN PATENT SPECIFICATION

(11) **EP 2 799 743 B1**
(45) Date of publication and mention of the grant of the patent: **06.04.2016**
(21) Application number: 12861397.3
(22) Date of filing: 31.08.2012
(51) Int. Cl.: F16J 15/32, F16J 15/16

(54) **SEALING DEVICE**
DICHTUNGSVORRICHTUNG
DISPOSITIF D'ÉTANCHÉITÉ

(30) Priority: 27.12.2011 JP 2011284710
(43) Date of publication of application: 05.11.2014
(73) Proprietor: NOK Corporation, Tokyo 105-8585 (JP)
(72) Inventor: KIKUCHI Kenichi, Fukushima-shi Fukushima 960-1193 (JP)
(74) Representative: TBK
(86) International application number: PCT/JP2012/072101
(87) International publication number: WO 2013/099352

(56) References cited:
- WO-A1-2006/132121
- JP-A- 2005 028 854
- JP-A- 2007 224 948
- JP-A- 2007 247 708
- JP-A- 2010 265 949
- JP-A- 2011 043 212
- JP-A- 2011 208 683
- JP-U- H01 106 380
- US-A1- 2006 012 129

## Description

### BACKGROUND OF THE INVENTION

### Field of the Invention

The present invention relates to a sealing device which is used in a shaft seal part of a farm machine or a construction machinery exposed to a severe external (atmospheric side) environment, for example, muddy water, prevents the muddy water or dust from intruding from an external portion, and prevents an internal sealed material from leaking.

### Description of the Conventional Art

Conventionally, as this kind of sealing device, a structure shown in Fig. 5 has been known (patent document 1).

In other words, in a sealing device sealing a gap between a housing 100, and a rotary shaft 200 which extends through the housing 100, the sealing device is constructed by a seal member 300 which is retained to the housing 100 side, a sleeve member 400 which is retained to the rotary shaft 200 side and is made of a metal material, and a discoid protection ring 500 which is retained to the seal member 300 side.

Further, the sleeve member 400 is provided with an inner cylinder portion 41 which is fitted to an outer peripheral surface of the rotary shaft 200, and a collar portion 42 which extends to an outer side in a diametrical direction from one end in an axial direction of the inner cylinder portion 41.

Further, the seal member 300 is constructed by a reinforcing ring 31 having a tubular portion 311 which is fitted to the housing 100 side, an inner collar-like portion 312 which extends to an inner side in a diametrical direction from one end in an axial direction of the tubular portion 311, and an outer collar-like portion 313 which extends to an outer side in the diametrical direction from the other end in the axial direction of the tubular portion 311, and made of a metal material, a radial lip portion 32 which is integrally formed in the inner collar-like portion 312, is made of a rubber-like elastic material and comes into contact in a sealing manner with an outer peripheral surface of the inner cylinder portion 41, and an end face lip portion 34 which comes into elastic contact with the collar portion 42.

Further, the protection ring 500 is structured such that an outer end portion 51 in a diametrical direction of the protection ring is caulked and fixed by an end portion 3131 in a diametrical direction of the outer collar-like portion 313, and an inner end portion 52 in the diametrical direction forms a tubular folded portion 521 which extends toward the collar portion 42.

Further, in the collar portion 42 of the sleeve member 400, there are formed a first dust lip 421 which comes into elastic contact with an inner peripheral surface of the tubular folded portion 521 and is made of a rubber-like elastic material, a second dust lip 422 which comes into elastic contact with an inner side surface 53 of the protection ring 5 and is made of a rubber-like elastic material, and one annular projection 423 which comes into contact with a leading end portion 522 of the tubular folded portion 521, is provided in a surface of the collar portion 42 and is made of a rubber-like elastic material.

According to the structure mentioned above, the sealing device is structured such as to prevent the muddy water or the dust from intruding from the external portion.

However, in the shaft seal part of the farm machine or the construction machinery, displacement is unavoidably generated in a radial direction and a thrust direction structurally.

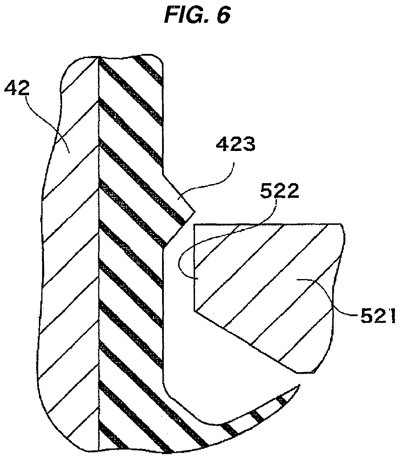

Accordingly, as shown in Fig. 6, the contact between the leading end portion 522 of the tubular folded portion 521 and one annular projection 423 is easily disengaged. As a result, a sealing performance is deteriorated.

### Prior Art Document

### Patent Document

Patent Document 1: Japanese Unexamined Patent Publication No. 2007-224948
Patent Application number: JP 2007 247708 A.

### SUMMARY OF THE INVENTION

### Problem to be Solved by the Invention

Accordingly, the present invention is made by taking the conditions mentioned above into consideration, and an object of the present invention is to provide a sealing device which can effectively prevent muddy water or dust from intruding from an external portion, even in the case that the sealing device is used for a long time period in a shaft seal part of a farm machine or a construction machinery which is exposed to a severe (atmospheric side) external environment, for example, the muddy water, in a limited space.

### Means for Solving the Problem

In order to achieve the object mentioned above, according to the present invention, there is provided a sealing device sealing a gap between a housing, and a rotary shaft which extends through the housing, the sealing device comprising:
a seal member which is retained to the housing side;
a sleeve member which is retained to the rotary shaft side and is made of a metal material; and
a discoid protection ring which is retained to the seal member side,
wherein the sleeve member is provided with an inner cylinder portion which is fitted to an outer peripheral surface of the rotary shaft, and a collar portion which extends to an outer side in a diametrical direction from one end in an axial direction of the inner cylinder portion,
wherein the seal member is constructed by a reinforcing ring comprising a tubular portion which is fitted to the housing side, an inner collar-like portion which extends to an inner side in a diametrical direction from one end in an axial direction of the tubular portion, and an outer collar-like portion which extends to an outer side in the diametrical direction from the other end in the axial direction of the tubular portion, and made of a metal material, a radial lip portion which is integrally formed in the inner collar-like portion, is made of a rubber-like elastic material and comes into contact in a sealing manner with an outer peripheral surface of the inner cylinder portion, and an end face lip portion which comes into elastic contact with the collar portion,
wherein the protection ring is structured such that an outer end portion in a diametrical direction is caulked and fixed by an end portion in a diametrical direction of the outer collar-like portion, and an inner end portion in a diametrical direction forms a tubular folded portion which extends toward the collar portion, and
wherein the collar portion of the sleeve member forms a first dust lip which comes into elastic contact with an inner peripheral surface of the tubular folded portion and is made of a rubber-like elastic material, a second dust lip which comes into elastic contact with an inner side surface of the protection ring and is made of a rubber-like elastic material, and a plurality of annular projections which are faced to a leading end portion of the tubular folded portion in a contactable manner, are provided in a surface of the collar portion and are made of a rubber-like elastic material.

### Effect of the Invention

The present invention achieves effects which are described below.

According to the sealing device of the invention described in claim 1, it is possible to effectively prevent the muddy water or the dust from intruding from the external portion, even in the case that the sealing device is used for a long time period in the shaft seal part of the farm machine or the construction machinery which is exposed in the severe external (atmospheric side) environment, for example, the muddy water, in the limited space.

Further, according to the sealing device of the invention described in claim 2, since a plurality of annular projections are always in contact, it is possible to effectively prevent the muddy water or the dust from intruding from the external portion in a more secure manner.

Further, according to the sealing device of the invention described in claim 3, since the annular projections serve as a bumper for receiving and supporting the protection ring even in the case that the displacement is unavoidably generated in the radial direction and the thrust direction, it is possible to keep a positional relationship of the seal member and the protection ring in relation to the sleeve member at a right position, and suppress reduction of a lip fastening margin and generation of a gap. Therefore, it is possible to effectively prevent leakage from an inner portion, and effectively prevent the muddy water or the dust from intruding from an external portion.

### BRIEF EXPLANATION OF THE DRAWINGS

Fig. 1 is a cross sectional view of a sealing device according to the present invention;
Fig. 2 is a partly enlarged view of Fig. 1;
Fig. 3 is a view showing the other embodiment according to the present invention in the same manner as Fig. 2;
Fig. 4 is a view showing further the other embodiment according to the present invention in the same manner as Fig. 2;

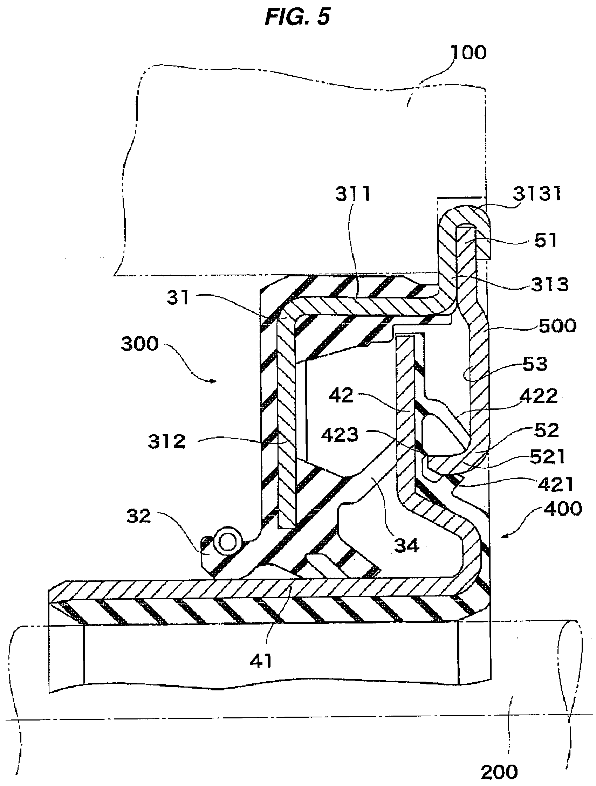

Fig. 5 is a cross sectional view of a sealing device according to a prior art; and
Fig. 6 is a partly enlarged view showing a state in which the sealing device shown in Fig. 5 has problems.

### Description of Reference Numerals

- 1: housing
- 2: shaft
- 3: seal member
- 4: sleeve member
- 5: protection ring
- 31: reinforcing ring
- 32: radial lip portion
- 34: end face lip portion
- 41: inner cylinder portion
- 42: collar portion
- 52: diametrical inner end portion
- 311: tubular portion
- 312: inner collar-like portion
- 313: outer collar-like portion
- 421: first dust lip
- 422: second dust lip
- 423: annular projection
- 521: tubular folded portion
- 522: leading end portion
- 523: flange portion

### DETAILED DESCRIPTION OF PREFERRED EMBODIMENTS

A description will be given below of a best mode for carrying out the present invention.

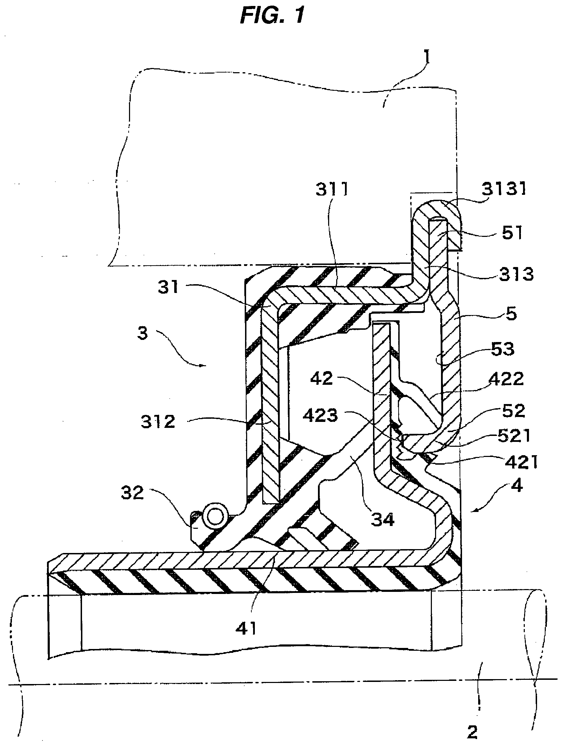

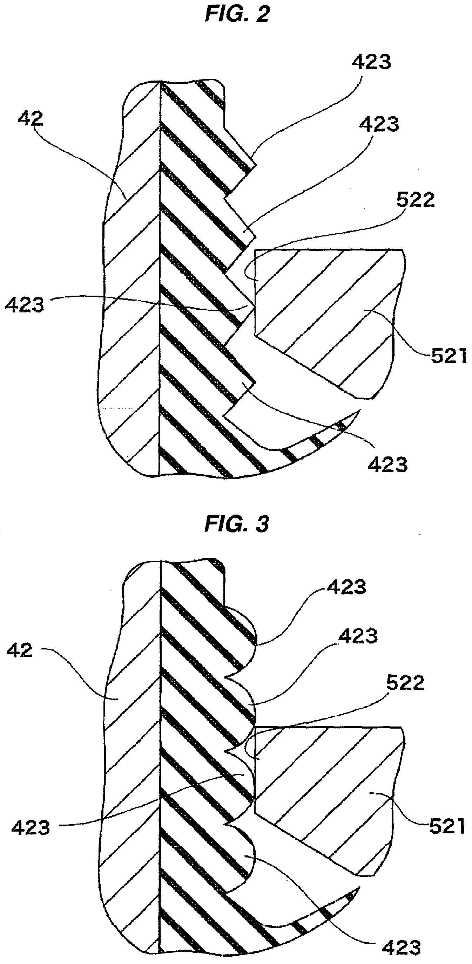

A sealing device according to the present invention is a sealing device which seals a gap between a housing 1, and a rotary shaft 2 extending through the housing 1, and is constructed by a seal member 3 which is retained to the housing 1 side, a sleeve member 4 which is retained to the rotary shaft 2 side and is made of a metal material, and a discoid protection ring 5 which is retained to the seal member 3 side, as shown in Figs. 1 and 2.

The sleeve member 4 is provided with an inner cylinder portion 41 which is fitted to an outer peripheral surface of the rotary shaft 2, and a collar portion 42 which extends to an outer side in a diametrical direction from one end in an axial direction of the inner cylinder portion 41.

Further, the seal member 3 is constructed by a reinforcing ring 31 having a tubular portion 311 which is fitted to the housing 1 side, an inner collar-like portion 312 which extends to an inner side in a diametrical direction from one end in an axial direction of the tubular portion 311, and an outer collar-like portion 313 which extends to an outer side in the diametrical direction from the other end in the axial direction of the tubular portion 311, and made of a metal material, a radial lip portion 32 which is integrally formed in the inner collar-like portion 312, is made of a rubber-like elastic material and comes into contact in a sealing manner with an outer peripheral surface of the inner cylinder portion 41, and an end face lip portion 34 which comes into elastic contact with the collar portion 42.

Further, the protection ring 5 is structured such that an outer end portion 51 in a diametrical direction is caulked and fixed by an end portion 3131 in a diametrical direction of the outer collar-like portion 313, and an inner end portion 52 in a diametrical direction forms a tubular folded portion 521 which extends toward the collar portion 42, and the collar portion 42 of the sleeve member 4 forms a first dust lip 421 which comes into elastic contact with an inner peripheral surface of the tubular folded portion 521 and is made of a rubber-like elastic material, a second dust lip 422 which comes into elastic contact with an inner side surface 43 of the protection ring 5 and is made of a rubber-like elastic material, and a plurality of annular projections 423 which are faced to a leading end portion 522 of the tubular folded portion 521 in a contactable manner, are provided in a surface of the collar portion 42 and are made of a rubber-like elastic material.

According to the structure mentioned above, it is possible to effectively prevent the muddy water or the dust from intruding from the external portion, even in the case that the sealing device is used for a long time period in the shaft seal part of the farm machine or the construction machinery which is exposed in the severe external (atmospheric side) environment, for example, the muddy water, in the limited space.

Further, a plurality of annular projections 423 provided in the surface of the collar portion 42 and made of the rubber-like elastic material are formed as the saw-tooth like projections having sharp leading ends, however, may be formed as annular projections 423 each having a circular-arc shaped cross section.

According to the circular-arc shaped annular projections 423 mentioned above, it is possible to smoothly move the contact area between the annular projections 423 and the leading end portion 522 even in the case that any displacement is unavoidably generated in a radial direction and a thrust direction.

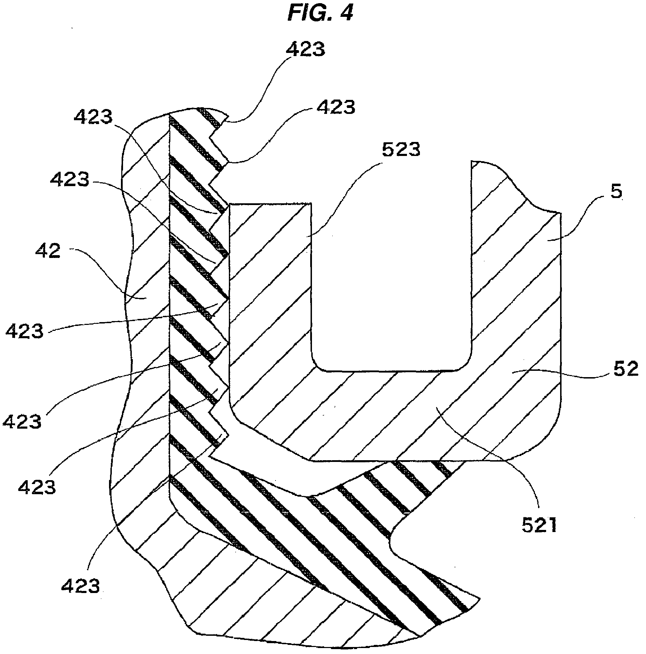

A description will be given of the other embodiment according to the present invention with reference to Fig. 4.

A different point from the previously described embodiment exists in a point that the tubular folded portion forms a flange portion 523 which extends toward an outer side in the diametrical direction along the collar portion 42 from the leading end portion 522, and the flange portion 523 comes into elastic contact with a plurality of annular projections 423.

According to the structure mentioned above, since a plurality of annular projections 423 always come into contact with the flange portion 523, the annular projections 423 serve as a bumper which bears the protection ring 5, even in the case that the displacement is unavoidably generated in the radial direction and the thrust direction. Therefore, since it is possible to keep a positional relationship of the seal member 3 and the protection ring 5 in relation to the sleeve member 4 at a right position, and suppress reduction of a lip fastening margin and generation of a gap, it is possible to effectively prevent leakage from an inner portion, and effectively prevent the muddy water or the dust from intruding from the external portion.

As mentioned above, since the leading end portion 522 is structured such as to always come into contact with at least one of the annular projections 423 even in the case that any displacement exists in the radial direction and the thrust direction, it is possible to effectively prevent the muddy water or the dust from intruding from the external portion.

Therefore, in the embodiment shown in Figs. 1 and 2, a distance between a plurality of annular projections 423 is designed to be smaller than a width in the diametrical direction of the leading end portion 522.

Further, it goes without saying that the prevent invention is not limited to the best mode for carrying out the invention mentioned above, but can employ the other various structures which do not deflect from the scope of the claims.

### Industrial Applicability

The present invention is preferably used for the sealing device sealing the shaft seal part of a tiller or the construction machinery, which is used under the severe condition, for example, the muddy water, in its atmospheric side.

## Claims

1. A sealing device sealing a gap between a housing (1), and a rotary shaft (2) which extends through said housing, the sealing device comprising:
a seal member (3) which is retained to said housing (1) side;
a sleeve member (4) which is retained to said rotary shaft (2) side and is made of a metal material; and
a discoid protection ring (5) which is retained to said seal member (3) side,
wherein said sleeve member (4) is provided with an inner cylinder portion (41) which is fitted to an outer peripheral surface of said rotary shaft (2), and a collar portion (42) which extends to an outer side in a diametrical direction from one end in an axial direction of said inner cylinder portion (41),
wherein said seal member (3) is constructed by a reinforcing ring (31) comprising a tubular portion (311) which is fitted to said housing (1) side, an inner collar-like portion (312) which extends to an inner side in a diametrical direction from one end in an axial direction of said tubular portion (311), and an outer collar-like portion (313) which extends to an outer side in the diametrical direction from the other end in the axial direction of said tubular portion (311), and made of a metal material, a radial lip portion (32) which is integrally formed in said inner collar-like portion (312), is made of a rubber-like elastic material and comes into contact in a sealing manner with an outer peripheral surface of said inner cylinder portion (41), and an end face lip portion (34) which comes into elastic contact with said collar portion (42),
wherein said protection ring (5) is structured such that an outer end portion (51) in a diametrical direction is caulked and fixed by an end portion (3131) in a diametrical direction of said outer collar-like portion (313), and an inner end portion (52) in a diametrical direction forms a tubular folded portion (521) which extends toward said collar portion (42), and
wherein said collar portion (42) of said sleeve member (4) forms a first dust lip (421) which comes into elastic contact with an inner peripheral surface of said tubular folded portion (521) and is made of a rubber-like elastic material, a second dust lip (422) which comes into elastic contact with an inner side surface (53) of said protection ring (5) and is made of a rubber-like elastic material, **characterized in that** said collar portion comprises a plurality of annular projections (423) which are faced to a leading end portion (522) of said tubular folded portion (521) in a contactable manner, are provided in a surface of said collar portion (42) and are made of a rubber-like elastic material.

2. The sealing device according to claim 1, wherein said tubular folded portion (521) forms a flange portion (523) which extends toward an outer side in the diametrical direction along said collar portion (42) from said leading end portion (522), and said flange portion (523) comes into elastic contact with said plurality of annular projections (423).

3. The sealing device according to claim 1, wherein said leading end portion (522) always comes into contact with at least one of said annular projections (423).

## Patentansprüche

1. Dichtungsvorrichtung, die einen Spalt zwischen einem Gehäuse (1) und einer Rotationswelle (2), die sich durch das Gehäuse erstreckt, abdichtet, wobei die Dichtungsvorrichtung Folgendes aufweist:
ein Dichtungsbauteil (3), das an der Seite des Gehäuses (1) gehalten ist;
ein Hülsenbauteil (4), das an der Seite der Rotationswelle (2) gehalten ist und aus einem Metallwerkstoff ist; und
einen scheibenförmigen Schutzring (5), der an der Seite des Dichtungsbauteils (3) gehalten ist,
wobei das Hülsenbauteil (4) mit einem inneren Zylinderabschnitt (41), der an eine Außenumfangsfläche der Rotationswelle (2) gepasst ist, und einem Kragenabschnitt (42) versehen ist, der sich zu einer Außenseite in einer Durchmesserrichtung von einem Ende in einer Axialrichtung des inneren Zylinderabschnitts (41) erstreckt,
wobei das Dichtungsbauteil (3) durch einen Verstärkungsring (31), der einen Rohrabschnitt (311), der an die Seite des Gehäuses (1) gepasst ist, einen inneren kragenartigen Abschnitt (312), der sich zu einer Innenseite in einer Durchmesserrichtung von einem Ende in einer Axialrichtung des Rohrabschnitts (311) erstreckt, und einen äußeren kragenartigen Abschnitt (313), der sich zu einer Außenseite in der Durchmesserrichtung von dem anderen Ende in der Axialrichtung des Rohrabschnitts (311) erstreckt, aufweist und aus einem Metallwerkstoff ist, einen radialen Lippenabschnitt (32), der einstückig in dem inneren kragenartigen Abschnitt (312) ausgebildet ist, aus einem gummiartigen elastischen Werkstoff ist und mit einer Außenumfangsfläche des inneren Zylinderabschnitts (41) in einer abdichtenden Weise in Kontakt kommt, und einen Endflächenlippenabschnitt (34) aufgebaut ist, der mit dem Kragenabschnitt (42) in elastischen Kontakt kommt,
wobei der Schutzring (5) derart aufgebaut ist, dass ein äußerer Endabschnitt (51) in einer Durchmesserrichtung durch einen Endabschnitt (3131) in einer Durchmesserrichtung des äußeren kragenartigen Abschnitts (313) verstemmt und fixiert ist und ein innerer Endabschnitt (52) in einer Durchmesserrichtung einen rohrförmig gefalteten Abschnitt (521) ausbildet, der sich in Richtung des Kragenabschnitts (42) erstreckt, und
wobei der Kragenabschnitt (42) des Hülsenbauteils (4) eine erste Staublippe (421), die mit einer Innenumfangsfläche des rohrförmig gefalteten Abschnitts (521) in elastischen Kontakt kommt und aus einem gummiartigen elastischen Werkstoff ist, und eine zweite Staublippe (422) ausbildet, die mit einer Innenseitenfläche (53) des Schutzrings (5) in elastischen Kontakt kommt und aus einem gummiartigen elastischen Werkstoff ist,
**dadurch gekennzeichnet, dass**
der Kragenabschnitt (42) eine Vielzahl von ringförmigen Vorsprüngen (423) aufweist, die einem vorderen Endabschnitt (522) des rohrförmig gefalteten Abschnitts (521) in kontaktierbarer Weise zugewandt sind und die in einer Fläche des Kragenabschnitts (42) vorgesehen sind und aus einem gummiartigen elastischen Werkstoff sind.

2. Dichtungsvorrichtung gemäß Anspruch 1, wobei der rohrförmige gefaltete Abschnitt (521) einen Flanschabschnitt (523) ausbildet, der sich in Richtung einer Außenseite in der Durchmesserrichtung entlang des Kragenabschnitts (42) von dem vorderen Endabschnitt (522) erstreckt, und der Flanschabschnitt (523) mit der Vielzahl der ringförmigen Vorsprünge (423) in elastischen Kontakt kommt.

3. Dichtungsvorrichtung gemäß Anspruch 1, wobei der vordere Endabschnitt (522) immer mit mindestens einem der ringförmigen Vorsprünge (423) in Kontakt kommt.

## Revendications

1. Dispositif d'étanchéité scellant un espace entre un boîtier (1), et un arbre rotatif (2) qui s'étend à travers ledit boîtier, le dispositif d'étanchéité comprenant :
un élément d'étanchéité (3) qui est retenu à un côté dudit boîtier (1) ;
un élément manchon (4) qui est retenu à un côté dudit arbre rotatif (2) et est fait d'un matériau métallique ; et
une bague de protection discoïde (5) qui est retenue à un côté dudit élément d'étanchéité (3),
dans lequel ledit élément manchon (4) est prévu avec une partie cylindrique intérieure (41) qui est fixée à une surface périphérique extérieure dudit arbre rotatif (2), et une partie de col (42) qui s'étend vers un côté extérieur dans une direction diamétrale depuis une extrémité dans une direction axiale de ladite partie cylindrique intérieure (41),
dans lequel ledit élément d'étanchéité (3) est construit avec une bague de renforcement (31) comprenant une partie tubulaire (311) qui est fixée à un côté dudit boîtier (1), une partie en forme de col intérieure (312) qui s'étend vers un côté intérieur dans une direction diamétrale depuis une extrémité dans une direction axiale de ladite partie tubulaire (311), et une partie en forme de col extérieure (313) qui s'étend vers un côté extérieur dans une direction diamétrale depuis l'autre extrémité dans une direction axiale de ladite partie tubulaire (311), et faite d'un matériau métallique, une partie de lèvre radiale (32) qui est intégralement formée dans ladite partie en forme de col intérieure (312), est faite d'un matériau élastique caoutchoutique et entre en contact de façon étanche avec une surface périphérique extérieure de ladite partie cylindrique intérieure (41), et une partie de lèvre de face d'extrémité (34) qui entre en contact élastique avec ladite partie de col (42),
dans lequel ladite bague de protection (5) est structurée de sorte qu'une partie d'extrémité extérieure (51) dans une direction diamétrale est calfeutrée et fixée par une partie d'extrémité (3131) dans une direction diamétrale de ladite partie en forme de col extérieure (313), et une partie d'extrémité intérieure (52) dans une direction diamétrale forme une partie pliée tubulaire (521) qui s'étend vers ladite partie de col (42), et
dans lequel ladite partie de col (42) dudit élément de manchon (4) forme une première lèvre antipoussière (421) qui entre en contact élastique avec une surface périphérique intérieure de ladite partie pliée tubulaire (521) et est faite d'un matériau élastique caoutchoutique, une deuxième lèvre anti-poussière (422) qui entre en contact élastique avec une surface latérale intérieure (53) de ladite bague de protection (5) et est faite d'un matériau élastique caoutchoutique, **caractérisée en ce que** ladite partie de col comprend une pluralité de saillies annulaires (423) qui font face à une partie d'extrémité avant (522) de ladite partie pliée tubulaire (521) de façon à être en contact, sont prévues dans une surface de ladite partie de col (42) et sont faites d'un matériau élastique caoutchoutique.

2. Dispositif d'étanchéité selon la revendication 1, dans lequel la partie pliée tubulaire (521) forme une partie de bride (523) qui s'étend vers un côté extérieur dans une direction diamétrale le long de ladite partie de col (42) depuis ladite partie d'extrémité avant (522), et ladite partie de bride (523) entre en contact élastique avec ladite pluralité de saillies annulaires (423).

3. Dispositif d'étanchéité selon la revendication 1, dans lequel la partie d'extrémité avant (522) entre toujours en contact avec au moins une desdites saillies annulaires (423).
